# EUROPÄISCHE PATENTSCHRIFT

(11) **EP 0 373 358 B1**
(45) Veröffentlichungstag und Bekanntmachung des Hinweises auf die Patenterteilung: **19.01.1994**
(21) Anmeldenummer: 89120641.9
(22) Anmeldetag: 08.11.1989
(51) Int. Cl.: F23J 15/00, C10B 21/18, B01D 53/34, F23C 9/00

(54) **Verfahren zur Verringerung des NOx-Gehaltes im Abgas bei der Beheizung von Starkgas- oder Verbundkoksöfen und Koksofenbatterie zur Durchführung des Verfahrens**
Process for the reduction of the NO content in flue gas, in the heating of rich gas or verbund coke ovens and group of coke ovens to carry out the process
Procédé de réduction de la teneur en NO dans les gaz d'échappement lors du chauffage de gaz riche ou de four à coke verbund et groupe de fours à coke pour mettre en oeuvre ce procédé

(30) Priorität: 10.12.1988 DE 3841630
(43) Veröffentlichungstag der Anmeldung: 20.06.1990
(73) Patentinhaber: Krupp Koppers GmbH, 45143 Essen (DE)
(72) Erfinder: Dürselen, Heinz, D-5620 Velbert (DE); Schüffler, Arnulf, Dr., D-4300 Essen 1 (DE); Meyer, Günter, Dr., D-4300 Essen 1 (DE)
(74) Vertreter: Schumacher, Horst, Dr. Dipl.-Phys.

(56) Entgegenhaltungen:
- EP-A- 0 183 908
- EP-A- 0 288 031
- DE-A- 3 201 366
- DE-B- 2 658 847
- US-A- 4 130 388
- PATENT ABSTRACTS OF JAPAN vol. 9, no. 290 (M-430)(2013) 16 November 1985, & JP-A-60 129503 (BABCOCK HITACHI K.K.) 10 Juli 1985
- "The Making, Shaping and Treating of Steel", United States Steel Co., 9. Auflage, 1971, Seiten 140-143

## Beschreibung

Verfahren zur Verringerung des NOₓ-Gehaltes im Abgas bei der Beheizung von Starkgas- oder Verbundkoksöfen und Koksofenbatterie zur Durchführung des Verfahrens.

Die Erfindung betrifft ein Verfahren zur Verringerung des NOₓ-Gehaltes im Abgas bei der Beheizung von Starkgas- oder Verbundkoksöfen mit aus Zwillingsheizzügen zusammengesetzten Heizwänden, mit ein- oder mehrstufiger Verbrennung in den Zwillingsheizzügen und mit Regeneratoren für die Rückgewinnung von Abgaswärme und Vorwärmung der Unterfeuerungsmedien, wobei innerhalb der Zwillingsheizzüge eine Abgasumwälzung im Kreisstrom erfolgt. Die Erfindung betrifft ferner eine Koksofenbatterie zur Durchführung des Verfahrens.

Die NOₓ-Bildung hängt u.a. von der Flammentemperatur ab, die bei der Koksofenbeheizung mit Starkgas wegen des hohen Gasheizwertes einerseits und wegen der hohen Luftvorwärmung andererseits naturgemäß recht hoch ist (bis ca. 3000°C). Bei der Koksofenbeheizung mit Schwachgas entstehen dagegen wegen des niedrigeren Gasheizwertes und der größeren spez. Abgasmenge niedrigere Flammentemperaturen und damit geringere NOₓ-Konzentrationen im Abgas als bei der Unterfeuerung mit Starkgas.

Aus der EP-A-0 183908 ist es bekannt, Zur Verringerung des NOₓ-Gehaltes im Abgas von Koksöfen den Kreisstrom oder die interne Abgasrückführung anzuwenden. Hierbei wird bei Koksöfen mit Zwillingsheizzügen - mit Umkehrstellen oben und Öffnungen unten in den mittleren Binderwänden - Abgas aus dem jeweils fallenden in den jeweils steigenden bzw. beflammten Heizzug übergeführt, das somit innerhalb der Zwillingsheizzüge selbsttätig rezirkuliert.

Aus "The Making, Shaping and Treating of Steel", 9. Auflage, 1971, ist ferner bei starkgasbeheizten Koksöfen mit nicht aus Zwillingsheizzügen bestehenden Heizwänden die Rückführung von Abgas durch unterhalb der Regeneratoren verlaufende Kanäle bekannt. Die Abgasrückführung dient hierbei allein dem Zweck, das Starkgas zu verdünnen, um einer Zersetzung höherer Kohlenwasserstoffe im Starkgas und damit Ablagerungen dieser Crack-Produkte in den heißen, gasführenden Leitungen vorzubeugen.

Beide bekannten Verfahren der internen und externen Abgasrückführung wurden bisher nur unabhängig voneinander angewandt.

Bekanntlich erfordert die externe Abgasrückführung einigen zusätzlichen Aufwand: Gebläse für die Abgas- und ggf. auch Luftansaugung, ein Zuführungs- und Verteilsystem mit Regel- und Steuerorganen, größere Regeneratoren, ferner erhöhte Unterfeuerung und zusätzlichen Strombedarf. Wegen der erhöhten Investitions- und Betriebskosten hat die äußere Abgasrückführung daher kaum praktische Bedeutung erlangt. Der Kreisstrom dagegen ist mit diesen Nachteilen nicht behaftet und hat deshalb große Anwendung gefunden. Beide Verfahren haben allerdings hinsichtlich der erreichbaren Rückführrate ihre spezifischen Anwendungsgrenzen. Es ist ferner zu beachten, daß das extern rückgeführte Abgas wegen seiner etwas geringeren Eintrittstemperatur in den beflammten Heizzug eine größere Kühlwirkung hat als die gleiche Menge Kreisstromgas.

Der Erfindung liegt nun die Aufgabe zugrunde, die NOₓ-Bildung im Abgas von Koksöfen mit geringstmöglichem Mehraufwand noch weiter zu mindern, als dies mit den bekannten Verfahren allein erreicht werden konnte, dies insbesondere für den Starkgasbetrieb.

"Zur Lösung dieser Aufgabe schlägt die Erfindung vor, daß den Unterfeuerungsmedien, Gas und/oder Luft, vor oder bei dem Eintritt in den Ofen aus dem Abgaskanal abgesaugtes Abgas beigemischt wird."

Durch die erfindungsgemäße Kombination von externer und interner Abgasrückführung wird eine Absenkung der Flammentemperatur in einem solchen Maße möglich, wie dies mit einem der beiden bekannten Verfahren allein nicht zu verwirklichen ist. Infolge dieser Absenkung der Flammentemperatur wird die NOₓ-Bildung im Koksofen ganz wesentlich verringert, insbesondere bei Unterfeuerung mit Starkgas, ohne daß hierdurch die Ofenleistung beeinträchtigt wird. Die Kombination ermöglicht eine erwünschte vergrößerte Zumischrate, und mit ihr wird eine spürbare Senkung der Investitions- und Betriebskosten gegenüber der externen Abgasrückführung allein erreicht.

Die Erfindung sieht ferner vor, daß die Verbrennungsluft mittels Gebläse aus der freien Umgebung, insbesondere an Emissionsstellen der Batterie, angesaugt und den Öfen durch Leitungen als Zwangsluft zugeführt wird. Diese Maßnahme bietet die kostensparende Möglichkeit, eine weitestgehende Beseitigung von Koksofenemissionen mit der Ansaugung der Unterfeuerungsluft zu kombinieren.

Es wird ferner vorgeschlagen, daß der Mengenstrom von extern rückgeführtem Abgas unter Berücksichtigung der Kreisstrommenge derart geregelt wird, daß die gewünschte Flammentemperatur im Ofen auf Basis der Wärmebilanz in den Heizzügen konstant gehalten wird. Für die hier vorgeschlagene, in der Kokereitechnik neuartige Steuerung der Flammentemperatur mittels einer kombinierten internen und externen Rauchgasrückführung - unabhängig von der Gasart - wird ein spezifisches Regelsystem vorgesehen, wobei die Meßwerte von Mengenströmen, Heizwerten, O₂-Konzentrationen und Temperaturen von einem Rechner ausgewertet werden, der dann unter Berücksichtigung des jeweiligen Wärmebedarfs und der gewünschten Flammentemperatur die Befehle für die Einstellung der erforderlichen Mengenströme gibt.

Weiterhin soll das extern rückgeführte Abgas bei Starkgasbeheizung im Verbundofen nur den Regeneratoren zugeführt werden, die bei Schwachgasbetrieb mit Gas beaufschlagt werden und im Starkgasofen nur jedem zweiten Regenerator.

Es ist ferner vorgesehen, daß das Starkgas durch Zumischung von extern rückgeführtem Abgas auf Schwachgasqualität gebracht und dann der regenerativen Vorwärmung zugeführt wird. Bei dieser Arbeitsweise wird das Starkgas mit einer solchen Menge rückgeführten Abgases vermischt, daß der Heizwert dieser Mischung dem von Schwachgas gleicht (2500 bis 5200 kJ/Nm³). Dieses "gestreckte Starkgas" bzw. "künstliche Schwachgas" wird dann wie "echtes" Schwachgas regenerativ vorgewärmt und das Verbrennungsprodukt in den Zwillingsheizzügen erfindungsgemäß zusätzlich mit Kreisstrom beaufschlagt. Diese Anwendung des erfindungsgemäßen Beheizungssystems hat bei Verbundöfen den Vorteil, daß das Starkgasverteilungssystem und der Düsenkeller entfallen können.

Nach einem weiteren Vorschlag der Erfindung ist vorgesehen, daß die Umstellpausen des periodischen Beheizungswechsels bei zwei oder mehr Batterien zeitlich versetzt gefahren werden und das rückzuführende Abgas nur aus dem Abgaskanal der Batterien abgesaugt wird, die gerade befeuert werden. Hierdurch wird sichergestellt, daß während der Umstellung der einen Batterie bzw. zu Beginn der neuen Beheizungsperiode - statt Spülluft aus dem eigenen Kanal - Abgas von einer anderen Batterie angesaugt wird, die gerade befeuert wird. Die Ausführung erfordert entsprechende Anschlußleitungen und Steuerorgane. Auch bei dieser Verfahrensweise kann gleichzeitig ein Teil einer Batterie mit Starkgas und der andere Teil mit Schwachgas beheizt werden.

Die Erfindung sieht ferner vor, daß der Zug an den Abgasarmaturen aller Gas- und aller Luftregeneratoren bei Verbundöfen bzw. aller ersten und zweiten Regeneratoren bei Starkgasöfen seriell getrennt derart geregelt wird, daß hierdurch die Regeneratoren der beiden Serien mit jeweils gleichen oder unterschiedlichen Abgasmengen beaufschlagt werden und infolgedessen an allen Armaturen gleiche Abgastemperatur herrscht. Beispielsweise bei der Bildung eines "künstlichen Schwachgases" wird mit steigender Zumischrate an Abgas oder dessen Temperatur die Misch-bzw. Eintrittstemperatur des Schwachgases in den Regenerator immer größer und dementsprechend auch die Abgastemperatur des Gasregenerators. Um diesem Effekt entgegenzuwirken, empfiehlt es sich, die Aufteilung der Abgasströme auf die angeschlossenen Gas- und Luftregeneratoren nicht wie üblich 50 % / 50 %, sondern in einem solchen Verhältnis vorzunehmen, daß die Austrittstemperaturen jeweils gleich sind.

Eine andere Ausführungsform der Erfindung besteht darin, daß die Zugregulierung der Regeneratorserien so eingestellt wird, daß an deren Armaturen gezielt ungleiche Abgastemperaturen herrschen und für die äußere Abgasrückführung nur der Abgasstrom mit der niedrigeren Temperatur verwendet wird. Diese Maßnahme kann je nach den Betriebsbedingungen vorteilhafter sein als die vorgenannte, mit ihr kann insbesondere Unterfeinerung eingespart werden.

Die Erfindung betrifft weiterhin eine Batterie von Starkgas- oder Verbundkoksöfen zur Durchführung des erfindungsgemäßen Verfahrens mit aus Zwillingsheizzügen zusammengesetzen Heizwänden, mit ein-oder mehrstufiger Verbrennung in den Zwillingsheizzügen und mit Regeneratoren für die Rückgewinnung von Abgaswärme und Vorwärmung der Unterfeuerungsmedien, wobei die mittleren Binderwände der Zwillingsheizzüge, in denen sich oben die Umkehrstellen befinden, unten im Bereich der Heizzugsohle mit jeweils einer oder mehreren Öffnungen versehen sind, durch die Abgas aus dem fallenden Heizzug in den steigenden bzw. beflammten überströmt. Es ist vorgesehen, daß diese Batterie mit Mitteln für die äußere Abgasrückführung ausgestattet ist, wie Gebläsen, Ansaug- und Verteilleitungen, Drossel- und Absperrarmaturen, Meß- und Regeleinrichtungen.

Hierbei können die Heizwände der Starkgas- oder Verbundkoksöfen aus Zwillingsheizzügen in gleichgerichtet oder alternierend beflammter Reihenfolge aufgebaut sein. Es ist dabei ferner vorgesehen, daß die Koksofenbatterie mit an sich bekannten Mischvorrichtungen in den Verteilleitungen oder Ofeneintritten versehen ist, wie z.B. Venturi-Mischer, Verwirbelungseinbauten, Mischstrecken ausreichender Länge, eine schnelle Mischung fördernde Zusammenführungen und dgl.

Die erfindungsgemäße Koksofenbatterie ist weiterhin mit einem Regelsystem zur Konstanthaltung der gewünschten Flammentemperatur mittels einer kombinierten, internen und externen Abgasrückführung, unabhängig von der Gasart, ausgerüstet, wobei die vorhandene Flammentemperatur aus den erforderlichen Meßwerten, insbesondere Mengenströmen, Heizwerten, O₂-Konzentrationen und Temperaturen, von einem Rechner ermittelt wird, der dann unter Berücksichtigung des jeweiligen Wärmebedarfs und der vorgegebenen Flammentemperatur die Befehle für die Einstellung der erforderlichen Mengenströme gibt.

Die erfindungsgemäße Koksofenbatterie ist ferner mit einem Meß- und Regelsystem ausgestattet, das den mittleren Zug und die mittlere Abgastemperatur jeweils an den gerad-oder ungeradzahligen Regeneratoren, die bei Schwachgasbetrieb jeweils mit Gas oder Luft beschickt werden, erfaßt und je nach Vorgabe gleiche oder ungleiche Abgastemperaturen an den beiden Regeneratorserien durch Steuerung des Zuges einstellt.

Schließlich ist noch vorgesehen, daß die Serien gerad-oder ungeradzahliger bzw. mit Gas oder Luft beschickter Regeneratoren jeweils an getrennte Abgaskanäle angesch lossen sind.

## Patentansprüche

1. Verfahren zur Verringerung des NOₓ-gehaltes im Abgas bei der Beheizung von Starkgas- oder Verbundkoksöfen mit aus Zwillingsheizzügen zusammengesetzten Heizwänden, mit ein- oder mehrstufiger Verbrennung in den Zwillingsheizzügen und mit Regeneratoren für die Rückgewinnung von Abgaswärme und Vorwärmung der Unterfeuerungsmedien, wobei innerhalb der Zwillingsheizzüge eine Abgasumwälzung im Kreisstrom erfolgt, dadurch gekennzeichnet, daß den Unterfeuerungsmedien, Gas und/oder Luft, vor oder bei dem Eintritt in den Ofen aus dem Abgaskanal abgesaugtes Abgas beigemischt wird.

2. Verfahren nach Anspruch 1, dadurch gekennzeichnet, daß die Verbrennungsluft mittels Gebläse aus der freien Umgebung, insbesondere an Emissionsstellen der Batterie, angesaugt und den Öfen durch Leitungen als Zwangsluft zugeführt wird.

3. Verfahren nach den Ansprüchen 1 und 2, dadurch gekennzeichnet, daß der Mengenstrom von extern rückgeführtem Abgas unter Berücksichtigung der Kreisstrommenge derart geregelt wird, daß die gewünschte Flammentemperatur im Ofen auf Basis der Wärmebilanz in den Heizzügen konstant gehalten wird.

4. Verfahren nach den Ansprüchen 1 bis 3, dadurch gekennzeichnet, daß das extern rückgeführte Abgas bei Starkgasbeheizung im Verbundofen nur den Regeneratoren zugeführt wird, die bei Schwachgasbetrieb mit Gas beaufschlagt werden und im Starkgasofen nur jedem zweiten Regenerator.

5. Verfahren nach den Ansprüchen 1 bis 4, dadurch gekennzeichnet, daß das Starkgas durch Zumischung von extern rückgeführtem Abgas auf Schwachgasqualität gebracht und dann der regenerativen Vorwärmung zugeführt wird.

6. Verfahren nach den Ansprüchen 1 bis 5, dadurch gekennzeichnet, daß die Umstellpausen des periodischen Beheizungswechsels bei zwei oder mehr Batterien zeitlich versetzt gefahren werden und das rückzuführende Abgas nur aus dem Abgaskanal der Batterien abgesaugt wird, die gerade befeuert werden.

7. Verfahren nach den Ansprüchen 1 bis 6, dadurch gekennzeichnet, daß der Zug an den Abgasarmaturen aller Gas- und aller Luftregeneratoren bei Verbundöfen bzw. aller ersten und zweiten Regeneratoren bei Starkgasöfen seriell getrennt derart geregelt wird, daß hierdurch die Regeneratoren der beiden Serien mit jeweils gleichen oder unterschiedlichen Abgasmengen beaufschlagt werden und infolgedessen an allen Armaturen gleiche Abgastemperatur herrscht.

8. Verfahren nach den Ansprüchen 1 bis 7, dadurch gekennzeichnet, daß die Zugregulierung der Regeneratorserien so eingestellt wird, daß an deren Armaturen gezielt ungleiche Abgastemperaturen herrschen und für die äußere Abgasrückführung nur der Abgasstrom mit der niedrigeren Temperatur verwendet wird.

9. Batterie von Starkgas- oder Verbundkoksöfen zur Durchführung des Verfahrens nach den Ansprüchen 1 bis 8, mit aus Zwillingsheizzügen zusammengesetzten Heizwänden, mit ein- oder mehrstufiger Verbrennung in den Zwillingsheizzügen und mit Regeneratoren für die Rückgewinnung von Abgaswärme und Vorwärmung der Unterfeuerungsmedien, wobei die mittleren Binderwände der Zwillingsheizzüge, in denen sich oben die Umkehrstellen befinden, unten im Bereich der Heizzugsohle mit jeweils einer oder mehreren Öffnungen versehen sind, durch die Abgas aus dem fallenden Heizzug in den steigenden bzw. beflammten überströmt, dadurch gekennzeichnet, daß sie mit Mitteln für die externe Abgasrückführung ausgestattet ist, wie Gebläsen, Ansaug- und Verteilleitungen, Drossel- und Absperrarmaturen, Meß- und Regeleinrichtungen.

10. Koksofenbatterie nach Anspruch 9, dadurch gekennzeichnet, daß sie mit einem Regel System zur Konstanthaltung der gewünschten Flammentemperatur mittels einer kombinierten internen und externen Abgasrückführung unabhängig von der Gasart ausgerüstet ist, wobei die vorhandene Flammentemperatur aus den erforderlichen Meßwerten, insbesondere Mengenströmen, Heizwerten, O₂-Konzentrationen und Temperaturen, von einem Rechner ermittelt wird, der dann unter Berücksichtigung des jeweiligen Wärmebedarfs und der vorgegebenen Flammentemperatur die Befehle für die Einstellung der erforderlichen Mengenströme gibt.

11. Koksofenbatterie nach den Ansprüchen 9 und 10, dadurch gekennzeichnet, daß sie mit einem Meß- und Regelsystem ausgestattet ist, das den mittleren Zug und die mittlere Abgastemperatur jeweils an den gerad- oder ungeradzahligen Regeneratoren, die bei Schwachgasbetrieb jeweils mit Gas oder Luft beschickt werden, erfaßt und je nach Vorgabe gleiche oder ungleiche Abgastemperaturen an den beiden Regeneratorserien durch Steuerung des Zuges einstellt.

12. Koksofenbatterie nach den Ansprüchen 9 bis 11, dadurch gekennzeichnet, daß die Serien gerad- oder ungeradzahliger bzw. mit Gas oder Luft beschickter Regeneratoren jeweils an getrennte Abgaskanäle angeschlossen sind.

## Claims

1. A process for reducing the NOₓ content in the exit gas in the heating of rich-gas ovens or compound coke ovens having heating walls composed of twin heating flues, with single-stage or multi-stage combustion in the twin heating flues and with regenerators for recovering the heat in the exit gas and preheating the underfiring media, exit gas being circulated within the twin heating flues, characterised in that exit gas extracted from the exit gas duct is admixed to the underfiring media, gas and/or air, before or as they enter the oven.

2. A process according to Claim 1, characterised in that the combustion air is drawn in by means of a fan from the open surroundings, in particular at points of emission from the battery, and fed as forced air through ducts to the oven.

3. Process according to Claims 1 and 2, characterised in that the mass flow of externally recycled exit gas is controlled, taking into account the circulation rate, in such a way that the desired flame temperature in the oven is kept constant on the basis of the heat balance in the heating flues.

4. Process according to Claims 1 to 3, characterised in that, in the case of rich-gas heating in the compound oven, the externally recycled exit gas is fed only to the regenerators which, in lean-gas operation, are charged with gas and in the rich-gas oven only to every second regenerator.

5. Process according to Claims 1 to 4, characterised in that the rich gas is brought to lean gas quality by admixing externally recycled exit gas and then fed to the regenerative preheating.

6. Process according to Claims 1 to 5, characterised in that the change-over pauses of the periodic heating change in the case of two or more batteries are operated with an offset in time and the exit gas to be recycled is extracted only from the exit gas duct of the batteries just being fired.

7. Process according to Claims 1 to 6, characterised in that the draught at the exit gas valves of all gas regenerators and all air regenerators in compound ovens or of all first and second regenerators in rich-gas ovens are, serially separated, controlled in such a way that thereby the regenerators of the two series are charged in each case with identical or different exit gas rates and consequently the same exit gas temperature prevails at all the valves.

8. Process according to Claims 1 to 7, characterised in that the draught control of the regenerator series is adjusted such that the controlled exit gas temperatures prevailing at the valves thereof are not the same and only the exit gas stream at the lower temperature is used for the external exit gas recycle.

9. Battery of rich-gas ovens or compound coke ovens for carrying out the process according to Claims 1 to 8, having heating walls composed of twin heating flues, with single-stage or multi-stage combustion in the twin heating flues and with regenerators for recovering the heat in the exit gas and preheating the underfiring media, the central binder walls of the twin heating flues, where the reversal points are located at the top, being each provided in the region of the heating flue bottom with one or more orifices, through which exit gas flows over from the falling heating flue into the rising or fired flue, characterised in that it is fitted with means for external recycling of exit gas, such as fans, extraction lines and distribution lines, restriction valves and isolation valves, and instrumentation.

10. Coke oven battery according to Claim 9, characterised in that it is fitted with a control system for keeping the desired flame temperature constant by means of combined internal and external recycle of exit gas, independently of the type of gas, the existing flame temperature being determined from the requisite measured data, in particular mass flows, calorific values, O₂ concentrations and temperatures, by a computer which then issues the commands for adjusting the required mass flows, taking into account the heat requirement at the time and the preset flame temperature.

11. Coke oven battery according to Claims 9 and 10, characterised in that it is fitted with an instrumentation system which detects the mean draught and the mean exit gas temperature at each of the even- or odd-numbered regenerators, which are, in lean-gas operation, in each case charged with gas or air, and, depending on the input, sets identical or different exit gas temperatures at the two regenerator series by controlling the draught.

12. Coke oven battery according to Claims 9 to 11, characterised in that the series of even- or odd-numbered regenerators, or regenerators charged with gas or air, are each connected to separate exit gas ducts.

## Revendications

1. Procédé pour réduire la teneur en NOₓ dans les gaz brûlés sur des fours à coke chauffés au gaz riche ou système compound avec des parois de chauffe composées de doubles carneaux, avec une combustion en une ou plusieurs phases dans les doubles carneaux et avec des régénérateurs pour récupérer la chaleur des gaz brûlés et préchauffer les fluides devant fournir les calories de chauffe du four dans le foyer inférieur, tandis qu'un brassage en circuit fermé des gaz brûlés est assuré au sein des doubles carneaux, caractérisé par le fait qu'avant ou à leur entrée dans le four, des gaz brûlés, puisés par aspiration dans le conduit des gaz brûlés, sont mélangés aux fluides, gaz et/ou air, destinés à fournir les calories de chauffage au foyer inférieur du four à coke.

2. Procédé suivant la revendication 1,
caractérisé par le fait que l'air comburant est aspiré au moyen d'un ventilateur dans l'air environnant libre, en particulier aux points d'émission de la batterie, et qu'il est distribué aux fours sous forme d'air forcé par des conduites.

3. Procédé suivant les revendications 1 et 2,
caractérisé par le fait que le débit quantitatif des gaz brûlés recyclés en externe est régulé en tenant compte du volume de gaz de la circulation en circuit fermé, de manière telle que la température souhaitée des flammes dans le four est maintenue constante sur la base du bilan thermique dans les carneaux.

4. Procédé suivant les revendications 1 à 3,
caractérisé par le fait que dans le cas d'un chauffage au gaz riche dans le four système compound, les gaz brûlés recyclés par circuit externe ne sont amenés qu'à ceux des régénérateurs qui, en mode de fonctionnement au gaz pauvre, reçoivent du gaz, et dans le four fonctionnant au gaz riche qu'à un régénérateur sur deux.

5. Procédé suivant les revendications 1 à 4,
caractérisé par le fait que le gaz riche est amené à la quaiité d'un gaz pauvre par incorporation de gaz brûlés recyclés par le circuit externe, puis distribué au système de préchauffage fonctionnant à l'énergie de récupération.

6. Procédé suivant les revendications 1 à 5,
caractérisé par le fait que les temps de pause de conver sion pour l'alternance périodique du chauffage de deux batteries ou davantage sont conduits avec un décalage dans le temps et que les gaz brûlés devant être recyclés ne sont aspirés que dans le conduit des gaz brûlés de celles des batteries qui sont en train d'être chauffées sur le moment.

7. Procédé suivant les revendications 1 à 6,
caractérisé par le fait que sur les organes de réglage des gaz brûlés de tous les régénérateurs de gaz ezt de tous les régénérateurs d'air pour les fours système compound, respectivement de tous les premiers et seconds régénérateurs pour les fours fonctionnant au gaz riche, le tirage est réglé séparément série par série de manière telle qu'ainsi les régénérateurs des deux séries reçoivent toujours des quantités identiques ou différentes de gaz brûlés à traiter et que la température de gaz brûlés régnant par conséquent au niveau de tous les organes de réglage est toujours la même.

8. Procédé suivant les revendications 1 à 7,
caractérisé par le fait que la régulation du tirage des séries de régénérateurs est ajustée de manière telle que les températures des gaz brûlés régnant au niveau de leurs organes respectifs de réglage sont volontairement inégales et que seul le flux de gaz brûlés ayant la température relativement plus basse est utilisé pour le recyclage externe des gaz brûlés.

9. Batterie de fours à coke chauffés au gaz riche ou système compound pour la mise en oeuvre du procédé suivant les revendications 1 à 8, avec des parois de chauffe composées de doubles carneaux, avec une combustion en une ou plusieurs phases dans les doubles carneaux et avec des régénérateurs pour récupérer la chaleur des gaz brûlés et préchauffer les fluides devant fournir les calories de chauffe du four dans le foyer inférieur, tandis que les parois médianes en parpaings des doubles carneaux, dans lesquelles les points de renvoi se trouvent en haut, sont chacune munies en bas, dans la zone de la sole de carneau, d'une ou de plusieurs ouvertures par lesquelles des gaz brûlés passent en provenance du carneau descendant dans le carneau ascendant, c'est-à-dire chauffé par les flammes,
caractérisée par le fait que ladite batterie est équipée de moyens pour le recyclage externe des gaz brûlés, tels que des souffleries, des conduites d'aspiration et de répartition, des organes de réglage par étranglement et d'arrêt et des dispositifs d'instrumentation de mesure et de régulation.

10. Batterie de fours à coke suivant la revendication 9,
caractérisée par le fait qu'elle est équipée d'un système de régulation destiné à maintenir constante la température souhaitée des flammes au moyen d'un recyclage combiné, interne et externe, des gaz brûlés, indépendamment de la nature du gaz, tandis que la température des flammes existante est déterminée à partir des valeurs mesurées, en particulier pour les débits quantitatifs, les valeurs calorifiques, les concentrations en O₂ et les températures, par un ordinateur qui délivre ensuite, en tenant compte des besoins en calories à chaque moment et de la température des flammes prescrite par la consigne, les ordres pour le réglage des débits quantitatifs nécessaires.

11. Batterie de fours à coke suivant les revendications 9 et 10,
caractérisée par le fait qu'elle est équipée d'un système d'instrumentation de mesure et de régulation qui appréhende le tirage moyen et la température moyenne des gaz brûlés séparément au niveau des régénérateurs pairs et impairs qui, en régime de fonctionnement au gaz pauvre, sont alimentés les uns par du gaz, les autres par de l'air, et ajuste, suivant la consignez prescrite, des températures identiques ou différentes sur les deux séries de régénérateurs par un pilotage du tirage.

12. Batterie de fours à coke suivant les revendications 9 à 11,
caractérisée par le fait que les séries de régénérateurs pairs, respectivement impairs, c'est-à-dire alimentés par du gaz, respectivement par de l'air, sont branchées chacune à des conduits séparés pour gaz brûlés.
